# EUROPÄISCHE PATENTSCHRIFT

(11) **EP 0 624 611 B1**
(45) Veröffentlichungstag und Bekanntmachung des Hinweises auf die Patenterteilung: **29.12.1997**
(21) Anmeldenummer: 94106805.8
(22) Anmeldetag: 02.05.1994
(51) Int. Cl.: C08G 18/50, C08G 18/48, C08G 18/66, C08G 18/65, C08J 9/00

(54) **Verfahren zur Herstellung von Polyurethan-Schaumstoffen**
Process for the preparation of polyurethane foams
Procédé de préparation de mousses de polyuréthane

(30) Priorität: 12.05.1993 DE 4315874
(43) Veröffentlichungstag der Anmeldung: 17.11.1994
(73) Patentinhaber: BASF Aktiengesellschaft, 67063 Ludwigshafen (DE)
(72) Erfinder: Horn, Peter, Dr., D-69118 Heidelberg (DE); Hinz, Werner, Dr., D-67227 Frankenthal (DE); Jung, Ludwig, D-82291 Mammendorf/Obb. (DE)

(56) Entgegenhaltungen:
- EP-A- 0 424 544
- EP-A- 0 538 673
- DE-A- 2 206 328
- FR-A- 2 342 309

## Beschreibung

Die Erfindung betrifft ein Verfahren zur Herstellung von Polyurethan-Schaumstoffen, im folgenden auch abgekürzt PU-Schaumstoffe genannt, vorzugsweise PU-Halbhartschaumstoffe, mit einer verbesserten Schaumstruktur und einem besseren Fließverhalten der schäumfähigen Reaktionsmischung durch Umsetzung der an sich bekannten Ausgangsstoffe Polyisocyanate (a), höhermolekularen Polyhydroxylverbindungen (b) und Vernetzungsmitteln (c) in Gegenwart von Treibmitteln (d), gegebenenfalls Katalysatoren (e), Zusatzstoffen (f) und gegebenenfalls Hilfsmitteln (g), wobei erfindungsgemäß als Vernetzungsmittel (c) Polyoxyalkylen-polyole mit einer Funktionalität von 3 bis 8, einer Hydroxylzahl von 200 bis 1300 und einem Gehalt an Alkaliionen von 150 bis 1200 ppm und als Zusatzstoff (f) anorganische und/oder organische Säuren verwendet werden.

Die Herstellung von PU-Schaumstoffen durch Umsetzung von organischen Polyisocyanaten mit höhermolekularen Polyhydroxylverbindungen und gegebenenfalls Kettenverlangerungs- und/oder Vernetzungsmitteln in Gegenwart von Katalysatoren und Treibmitteln sowie gegebenenfalls Zusatzstoffen und Hilfsmitteln ist bekannt und wird in zahlreichen Patent- und Literaturpublikationen beschrieben. Beispielhaft genannt sei das Kunststoff-Handbuch, Band VII, Polyurethane, 1. Auflage, 1966, herausgegeben von Dr. R. Vieweg und Dr. A. Höchtlen, Carl Hanser Verlag, München.

Bekannt ist ferner die Herstellung von PU-Halbhartschaumstoffen nach dem Prepolymer-Verfahren, Üblicherweise auf der Basis von Toluylen-diisocyanat(TDI)-Prepolymeren, und dem One shot-Verfahren, vorteilhafterweise unter Verwendung von Mischungen aus DiPhenylmethan-diisocyanaten (MDI) und Polyphenyl-polymethylen-polyisocyanaten, sogenannten Roh-MDI, als Polyisocyanate. Durch eine gezielte Auswahl von höhermolekularen Polyhydroxylverbindungen und Kettenverlängerungs- und/oder Vernetzungsmitteln und durch unterschiedliche Mengen an Polyisocyanaten und Wasser können nach diesen Verfahren PU-Halbhartschaumstoffe mit unterschiedlichen mechanischen Eigenschaften hergestellt werden. PU-Halbhartschaumstoffe können ferner ohne die Mitverwendung von Wasser nach dem Frothing-Verfahren unter Zusatz von Dichlordifluormethan als Treibmittel hergestellt werden. Als Polyhydroxylverbindungen findet hierbei eine Kombination aus verzweigten, höhermolekularen Polyoxyalkylen-polyolen und Amin-gestarteten Kettenverlängerungsmittel mit Hydroxylzahlen im Bereich von 450 bis 500 Verwendung. Aktiviert werden kann die Polyadditionsreaktion durch organische Zinnverbindungen (Kunststoff-Handbuch, Band VII, Polyurethane, 2. Auflage, 1983, herausgegeben von D. G. Oertel, Carl Hanser Verlag, München, Wien).

In der EP-A-0 490 145 werden Verbundelemente beschrieben, die bestehen aus mindestens einer Deckschicht aus Polyvinylchlorid oder einem polyvinylchloridhaltigen Polymerisatgemisch und einem PU-Schaumstoff, vorzugsweise einem PU-Halbhart- oder -Hartschaumstoff.

PU-Schaumstoffe werden zweckmäßigerweise unter Zusatz von tertiären Aminen als Katalysatoren hergestellt, da diese sowohl die Reaktion zwischen den Hydroxylgruppen der Polyhydroxylverbindungen und NCO-Gruppen der Polyisocyanate, die Urethanbildung, als auch die Umsetzung zwischen Wasser und NCO-Gruppen unter Bildung von Aminogruppen und Kohlendioxid als Treibgas, die Treibreaktion, beschleunigen, wobei insbesondere beim One shot-Verfahren die Geschwindigkeiten der nebeneinander ablaufenden Reaktionen exakt aufeinander abgestimmt sein müssen. Da neben der Polyadditions- und Treibreaktion bei der Schaumstoffbildung noch Vernetzungsreaktionen unter Ausbildung von Allophanat-, Harnstoff-, Biuret- und Cyanuratstrukturen ablaufen können, müssen die eingesetzten Katalysatoren einen synchronen Ablauf dieser verschiedenartigen Umsetzungen gewährleisten. Die Katalysatoren dürfen weder durch eine frühzeitigen Einbau in das Polyurethangerüst ihre katalytische Wirksamkeit verlieren, noch den hydrolytischen Zerfall des hergestellten PU-Schaumstoffs beschleunigen.

Nachteilig ist der unangenehme Geruch vieler in der Praxis als Katalysator verwendeter tertiärer Amine, der sich auf die hergestellten PU-Schaumstoffe übertragen und ihre Verwendung für gewisse Anwendungen negativ beeinflussen kann. Nach Angaben der DE-A-23 21 884 (GB-A-1 344 038) werden daher zur Herstellung von PU-Schaumstoffen mit einem tertiären Amin als Katalysator hergestellte Polyetherpolyole in Verbindung mit einer Saure und einem Silikonöl verwendet.

FR-A-2 342 309 beschreibt ein Verfahren zur Herstellung von isocyanurat haltigen PU-Schaum in gegenwart von Säure. Die Säure dient als Reaktivitätsregler, wodurch das Ausfüllen von Hohlräumen durch den Schaum erleichtert wird.

Die EP-A-0 424 544 beschreibt die Hertellung von Hartschaum unter Verwendung von Polyolen mit Alkoxid-Gruppen. Es werden u.a. das Aussehen des Schaumes, die Durck festigkeit und Dimensionsstabilität bestimmt.

Die Aufgabe der vorliegenden Erfindung bestand darin, den synchronen Ablauf der unterschiedlichen Reaktionen bei der PU-Schaumstoff-, vorzugsweise PU-Halbhartschaumstoffherstellung, zu gewährleisten unter Vermeidung einer Geruchsbelästigung beim Schäumprozeß und durch den hergestellten Schaumstoff. Die Neigung zur Lunkerbildung im PU-Schaumstoff sollte reduziert und dadurch die Ausschußrate bei der Hinterschäumung von Armaturentafeln und anderen Verbundelementen, z.B. solchen mit Deckschichten aus Polyvinylchlorid oder anderen polyvinylchloridhaltigen Polymerisatgemischen, drastisch vermindert werden. Durch die Verbesserung der PU-Schaumstruktur sollte das mechanische Eigenschaftsniveau erhöht und über den gesamten PU-Formkörper vereinheitlicht werden. Ferner sollte das Fließverhalten der schäumfähigen Reaktionsmischung erhöht und der Verarbeitungsbereich in bezug auf die Verschäumungsvorrichtungen und -bedingungen, z.B. die Temperaturbedingungen, erweitert werden.

Diese Aufgabe konnte überraschenderweise gelöst werden durch die Verwendung eines ausgewählten Vernetzungsmittels mit einem hohen Alkaliionengehalt, das insbesondere in Verbindungen mit Säuren als Zusatzstoff seine volle Wirksamkeit zeigt.

Gegenstand der Erfindung ist somit ein Verfahren zur Herstellung von PU-Schaumstoffen, vorzugsweise PU-Halbhartschaumstoffen, durch Umsetzung von
a) organischen Polyisocyanaten mit
b) Polyhydroxylverbindungen mit mindestens 2 reaktiven Wasserstoffatomen und
c) Vernetzungsmitteln
in Gegenwart von
d) Treibmitteln,
e) gegebenenfalls Katalysatoren,
f) Zusatzstoffen und
g) gegebenenfalls Hilfsmitteln,
das dadurch gekennzeichnet ist, daß man als Vernetzungsmittel (c) mindestens ein Polyoxyalkylen-polyol mit einer Funktionalität von 3 bis 8, einer Hydroxylzahl von 200 bis 1300 und einem Gehalt an Alkaliionen von 150 bis 1200 ppm und als Zusatzstoff (f) eine anorganische und/oder organische Säure verwendet.

Nach einer bevorzugten Ausführungsform werden die erfindungsgemäß verwendbaren Vernetzungsmittel (c) und Zusatzstoffe (f) insbesondere mit den speziellen Polyhydroxylverbindungen (b1) nach Anspruch 2 oder 3 und/oder (b2) nach Anspruch 4 kombiniert.

Diese neuen Kombinationen aus den Polyhydroxylverbindungen (b1) und/oder (b2), Vernetzungsmittel (c) und Zusatzstoff (f) bilden mit organischen Polyisocyanaten in Gegenwart von Treibmitteln und gegebenenfalls Katalysatoren auf Basis von Alkalimetallsalzen von Mono- und/oder Dicarbonsäuren oder/und metallorganischen Verbindungen sehr gut fließfähige, praktisch geruchsfreie schäumfähige Reaktionsmischungen. Die hergestellten PU-Schaumstoffe sind im wesentlichen geruchlos, zeigen eine gleichmäßige, im wesentlichen lunkerfreie Zellstruktur und besitzen ein gleichmäßig hohes mechanisches Eigenschaftsniveau.

Zu dem erfindungsgemäßen Verfahren zur Herstellung von PU-Schaumstoffen, vorzugsweise PU-Halbhartschaumstoffen, und den hierzu verwendbaren Ausgangsstoffen ist im einzelnen folgendes auszuführen:
a) Zur Herstellung der PU-Schaumstoffe, vorzugsweise PU-Halbhartschaumstoffe, eignen sich die an sich bekannten organischen, z.B. aliphatischen, cycloaliphatischen und vorzugsweise aromatischen Di- und/oder Polyisocyanate (a). Im einzelnen seien als aromatische Polyisocyanate beispielhaft genannt: Mischungen aus 4,4'- und 2,4'-Diphenylmethan-diisocyanat (MDI), Mischungen aus MDI und Polyphenyl-polymethylen-polyisocyanaten (Roh-MDI) mit einem Gehalt an MDI-Isomeren von zweckmäßigerweise mindestens 35 Gew.-%, vorzugsweise von 50 bis 90 Gew.-% und mehr, bezogen auf das Gesamtgewicht der Mischung, 2,4- und 2,6-Toluylen-diisocyanat (TDI) sowie die entsprechenden handelsüblichen Isomerenmischungen, Mischungen aus TDI und MDI und/oder Roh-MDI, beispielsweise solchen mit einem MDI-Gehalt von 30 bis 90 Gew.-%, vorzugsweise 40 bis 80 Gew.-%, bezogen auf das Gesamtgewicht des Roh-MDI's.
   Als organische Polyisocyanate (a) geeignet sind auch sogenannte modifizierte mehrwertige organische Isocyanate, d.h. Produkte, die durch chemische Umsetzung organischer Di- und/ oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-%, vorzugsweise von 12 bis 3,5 Gew.-% oder Quasiprepolymere mit einem NCO-Gehalt von 35 bis 14 Gew.-%, vorzugsweise von 34 bis 22 Gew.-%, wobei mit Urethangruppen modifizierte Polyisocyanate aus TDI, insbesondere einen NCO-Gehalt von 34 bis 28 Gew.-% und solche aus 4,4'-MDI, 4,4'- und 2,4'-MDI-Isomerenmischungen oder Roh-MDI, insbesondere einen NCO-Gehalt von 28 bis 22 Gew.-%, bezogen auf das Gesamtgewicht, aufweisen und hergestellt werden durch Umsetzung von Diolen, Oxalkylen-glykolen und/oder Polyoxyalkylen-glykolen mit Molekulargewichten von 62 bis 6 000, vorzugsweise von 134 bis 4 200 mit TDI, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder TDI-Basis.
   Besonders bewährt haben sich jedoch und daher vorzugsweise Anwendung finden Mischungen aus 4,4'- und 2,4'-MDI, Roh-MDI mit einem Gehalt an MDI von mindestens 35 Gew.-%, bezogen auf das Gesamtgewicht, Mischungen aus 4,4'- und 2,4'-MDI und Gemischen aus 2,4- und 2,6-TDI, Mischungen aus Roh-MDI und Gemischen aus 2,4- und 2,6-TDI, Urethangruppen enthaltende Polyisocyanatmischungen mit einem NCO-Gehalt von 28 bis 14 Gew.-%, bezogen auf das Gesamtgewicht, auf der Grundlage von MDI und/oder Roh-MDI.
b) Als Polyhydroxylverbindungen (b) mit mindestens 2 reaktiven Wasserstoffatomen werden zweckmäßigerweise höhermolekulare Polyhydroxylverbindungen mit einer Funktionalität von 2 bis 6, vorzugsweise von 2 bis 4 und insbesondere von 2 bis 3, einer Hydroxylzahl von 14 bis 200, vorzugsweise von 14 bis 160 und insbesondere von 14 bis 65 und einem Alkaliionengehalt von kleiner als 10 ppm, vorzugsweise kleiner als 5 ppm und insbesondere kleiner als 3 ppm verwendet. Als höhermolekulare Polyhydroxylverbindungen bewährt haben sich beispielsweise Polyoxyalkylen-polyole, Polyester-polyole, vorteilhafterweise solche hergestellt aus Alkandicarbonsauren und mehrwertigen Alkoholen, Polythioether-polyole, Polyesteramide, hydroxylgruppenhaltige Polyacetale, hydroxylgruppenhaltige, vorzugsweise aliphatische Polycarbonate oder Mischungen aus mindestens zwei der genannten Polyhydroxylverbindungen. Vorzugsweise Anwendung finden Polyester-polyole und/oder insbesondere Polyoxyalkylen-polyole.
   Geeignete Polyoxyalkylen-polyole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure und vorzugsweise mehrwertige, insbesondere zwei- bis sechswertige Alkohole oder Dialkylenglykole, wie z.B. Ethandiol, Propandiol-1,2 und -1,3, Diethylenglykol, Dipropylenglykol, Butandiol-1,4, Hexandiol-1,6, Glycerin, Trimethylolpropan, Pentaerythrit und Sorbit.
   Die Polyoxyalkylen-polyole, vorzugsweise Polyoxypropylen- und Polyoxypropylen-polyoxyethylen-polyole besitzen zur Herstellung der PU-Halbhartschaumstoffe zweckmäßigerweise eine Funktionalität von vorzugsweise 2 bis 4 und insbesondere von 2 bis 3 und Hydroxylzahlen vorzugsweise von 14 bis 200, insbesondere von 14 bis 160 und geeignete Polyoxytetramethylenglykole, Üblicherweise eine Hydroxylzahl von 37 bis 180.
   Als Polyhydroxylverbindungen (b) bzw. Polyoxyalkylen-polyole vorzüglich bewährt haben sich und daher insbesondere verwendet werden Polyoxyalkylen-polyole (b1) oder -gemische mit einer Funktionalität von 2 bis 4, vorzugsweise 2 bis 3 und einer Hydroxylzahl von 14 bis 160, vorzugsweise 14 bis 80 und insbesondere von 18 bis 80, die hergestellt werden durch Polyaddition von Ethylenoxid, 1,2-Propylenoxid oder Mischungen aus Ethylenoxid mit 1,2-Propylenoxid an mindestens ein Startermolekül der Formel 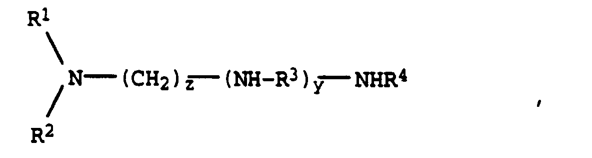 in der bedeuten
   - R¹ und R²: gleiche oder verschiedene, lineare oder verzweigte C₁- bis C₄-Alkylreste,
   beide Reste gemeinsam einen C₄- bis C₆-Cycloalkylenrest, der anstelle einer Methylengruppe ein -O- oder -NR⁵- Brückenglied enthalten kann, in dem R⁵ ein C₁- bis C₄-Alkylrest ist, oder
   gleiche oder verschiedene Dialkylaminoalkylenreste der Formel 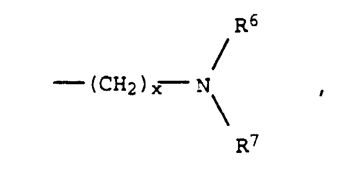 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann und X eine ganze Zahl von mindestens 3 ist,
   - z: eine ganze Zahl von mindestens 3,
   - R³: eine C₂- bis C₄-Alkylengruppe,
   - y: null oder eine Zahl von 1 bis 3 und
   - R⁴: Wasserstoff oder einen C₁- bis C₄-Alkylrest mit der Maßgabe, daß für y gleich null R⁴ Wasserstoff ist.

   Insbesondere bevorzugte Polyoxyalkylen-polyole (b1) mit einer Funktionalität von 2 bis 3 und einer Hydroxylzahl von 14 bis 160, insbesondere von 18 bis 80 können ferner hergestellt werden durch Polyaddition mindestens eines Alkylenoxids, vorzugsweise von Ethylenoxid, 1,2-Propylenoxid oder Mischungen aus Ethylenoxid und 1,2-Propylenoxid, an ein Startermolekül aus der Gruppe N,N-Dimethyl-diaminopropan-1,3, N,N-Dimethyldiaminobutan-1,4 und insbesondere N,N-Dimethyl-dipropylentriamin. Derartige hochreaktive Polyoxyalkylen-polyole (b1), bei denen die tertiäre Aminogruppe Über eine Spacerbrücke aus mindestens 3 Methylenresten an die mit Alkylenoxid reagierenden -NH- und/oder -NH₂-Gruppen gebunden ist, werden beschrieben in der DE-A-41 35 588, deren gesamte Offenbarung als Bestandteil der Erfindungsbeschreibung zu betrachten ist.
   Als Polyhydroxylverbindungen (b) bzw. Polyoxyalkylen-polyole insbesondere bevorzugt sind ferner Blockpolyoxypropylen-polyoxyethylen-polyole (b2) oder -gemische mit einer Hydroxylzahl von 14 bis 65, vorzugsweise von 14 bis 40 und insbesondere von 20 bis 35 und einem Gehalt an endständig gebundenen Ethylenoxideinheiten von 2 bis 9 Gew.-%, vorzugsweise 3 bis 8 Gew.-% und insbesondere 5 bis 7 Gew.-%, bezogen auf das Gewicht der Polyoxypropyleneinheiten, die hergestellt werden durch anionische Polymerisation bei erhöhten Temperaturen von 1,2-Propylenoxid an eine Startermolekülmischung mit einer durchschnittlichen Funktionalität von 2,3 bis 2,8, vorzugsweise von 2,3 bis 2,7 und insbesondere von 2,5 bis 2,7, die besteht aus Wasser und Glycerin und/oder Trimethylolpropan und Polymerisation von Ethylenoxid an das erhaltene Polyoxypropylenaddukt. Blockpolyoxypropylen-polyoxyethylen-polyole (b2) der genannten Art sind bekannt aus den EP-A-433 878 und EP-A-433 889, deren Gesamtbeschreibungen als Bestandteil der Erfindungsbeschreibung zu betrachten sind.
   Als Polyoxyalkylen-polyole eignen sich ferner polymermodifizierte Polyoxyalkylen-polyole (b3), vorzugsweise Pfropf-polyoxyalkylen-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyoxyalkylen-polyolen analog den Angaben der deutschen Patentschriften 11 11 934, 12 22 669 (US 3 304 273, 3 383 351, 3 523 093), 11 52 536 (GB 10 40 452) und 11 52 537 (GB 987 618) hergestellt werden, sowie Polyoxyalkylen-polyoldispersionen, die als disperse Phase, Üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyoxyalkylen-polyole können einzeln oder in Form von Mischungen verwendet werden. Als Polyhydroxylverbindungen vorzüglich bewährt haben sich Mischungen, die die Polyoxyalkylen-polyole (b1) und (b2) enthalten, wobei diese zweckmäßigerweise, bezogen auf das Gesamtgewicht, in einer Menge von 2 bis 50 Gew.-%, vorzugsweise 8 bis 48 Gew.-% (b1) und 10 bis 50 Gew.-%, vorzugsweise 20 bis 48 Gew.-% (b2) in der Mischung enthalten sind und gegebenenfalls die Differenz zu 100 Gew.-% aus von (b1) und (b2) verschiedenen Polyhydroxylverbindungen (b) besteht.
   Als Polyhydroxylverbindungen (b) verwendet werden können ferner Polyester-polyole, die beispielsweise aus Alkandicarbonsäuren mit 2 bis 12 Kohlenstoffatomen, vorzugsweise Alkandicarbonsäuren mit 4 bis 6 Kohlenstoffatomen oder Mischungen aus Alkandicarbonsäuren und/oder aromatischen Polycarbonsäuren und mehrwertigen Alkoholen, vorzugsweise Diolen, mit 2 bis 12 Kohlenstoffatomen, vorzugsweise 2 bis 6 Kohlenstoffatomen und/oder Alkylenglykolen hergestellt werden können. Als Alkandicarbonsäuren kommen beispielsweise in Betracht: Bernsteinsäure, Glutarsäure, Adipinsäure, Korksäure, Azelainsäure, Sebacinsäure und Decandicarbonsäure. Geeignete aromatische Polycarbonsäuren sind z.B. Phthalsäure, Isophthalsäure und Terephthalsäure. Die Alkandicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure- mono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und mehrwertige Alkohole, insbesondere Diole oder Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die Mischungen aus aromatischen und aliphatischen Dicarbonsäuren und vorzugsweise Alkandicarbonsäuren und/oder -derivaten und mehrwertigen Alkoholen katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und eine Hydroxylzahl von 25 bis 200, vorzugsweise 32 bis 140 und insbesondere 40 bis 94.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen z.B. solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Als Polyhydroxylverbindungen (b) verwendbar sind auch Mischungen aus den beispielhaft genannten höhermolekularen Polyhydroxylverbindungen und niedermolekularen Kettenverlängerungsmitteln. Als derartige Kettenverlängerungsmittel eignen sich z.B. Diole und/oder Triole mit Molekulargewichten kleiner als 400, vorzugsweise von 60 bis 300. In Betracht kommen beispielsweise aliphatische, cycloaliphatische und/ oder araliphatische Diole mit 2 bis 14 Kohlenstoffatomen, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan. Als Kettenverlängerungsmittel geeignet sind ferner niedermolekulare hydroxylgruppenhaltige Polyalkylenoxide mit Molekulargewichten bis 400 auf Basis von Ethylen- und/oder 1,2-Propylenoxid und den beispielhaft genannten Diolen und/oder Triolen als Startermoleküle.
   Sofern Mischungen aus höhermolekularen Polyhydroxylverbindungen und Kettenverlängerungsmitteln Anwendung finden, z.B. zur Modifizierung der mechanischen Eigenschaften, beispielsweise der Härte, enthalten diese die Kettenverlängerungsmittel zweckmäßigerweise in einer Menge von 0,5 bis 20 Gew.-%, vorzugsweise von 10 bis 15 Gew.-%, bezogen auf das Gesamtgewicht, wobei der Alkaliionengehalt der Mischung analog den höhermolekularen Polyhydroxylverbindungen (b) kleiner als 10 ppm, vorzugsweise kleiner als 5 ppm und insbesondere kleiner als 3 ppm ist.
c) Während die handelsüblichen höhermolekularen Polyhydroxylverbindungen und gegebenenfalls niedermolekularen Kettenverlängerungsmittel Alkaligehalte von kleiner als 10 ppm besitzen, ist für die Durchführung des erfindungsgemäßen Verfahrens wesentlich, daß die Vernetzungsmittel (c) im Vergleich zu den handelsüblichen Produkten einen sehr hohen Alkaliionengehalt aufweisen. Als Vernetzungsmittel (c) in Betracht kommen somit Polyoxyalkylen-polyole oder deren Mischungen mit einer Funktionalität von 3 bis 8, vorzugsweise 3 bis 6 und insbesondere 3, einer Hydroxylzahl von 200 bis 1300, vorzugsweise 210 bis 970 und insbesondere 350 bis 750 und einem Gehalt an Alkaliionen, vorzugsweise Kaliumionen, von 150 ppm bis 1200 ppm, vorzugsweise 150 ppm bis 800 ppm und insbesondere von 400 bis 600 ppm.
   Als Vernetzungsmittel (c) mit einem Alkaliionengehalt von 150 ppm bis 1200 ppm können die an sich bekannten Polyoxyalkylen-polyole mit einer Hydroxylzahl von 200 bis 1300 verwendet werden mit der Maßgabe, daß die Polyoxyalkylen-polyole direkt mit dem erfindungsgemäß erforderlichen Alkaliionengehalt hergestellt werden oder vorzugsweise durch eine geeignete Methode der Alkaliionengehalt von handelsüblichen Polyoxyalkylen-polyolen, die Üblicherweise einen Alkaliionengehalt von kleiner 10 ppm besitzen, erhöht wird. Zu diesem Zwecke können die Polyoxyalkylen-polyole mit wäßrigem Alkalihydroxid, vorzugsweise einer wäßrigen Kaliumhydroxidlösung, oder alkoholischen Alkalialkoholatlösungen, vorzugsweise alkoholischen Kaliumalkoholatlösungen, in den erforderlichen Mengen bei Raumtemperatur oder erhöhten Temperaturen, z.B. bei 20 bis 120°C behandelt werden. Danach wird das zugesetzte und gebildete Wasser bzw. der Alkohol bei einer Temperatur im Bereich von 70 bis 110°C, gegebenenfalls unter vermindertem Druck, z.B. von 0,01 bis 1 mbar, abdestilliert.
   Als Vernetzungsmittel (c) vorzüglich bewährt haben sich und daher vorzugsweise verwendet werden z.B. mit Trimethylolpropan gestartete Polyoxyethylen-polyole mit einer Hydroxylzahl im Bereich von 632 bis 970 und einem Kaliumionengehalt im Bereich von 400 bis 600 ppm, mit Glycerin gestartete Polyoxyethylen-polyole mit einer Hydroxylzahl im Bereich von 379 bis 1240 und einem Kaliumionengehalt im Bereich von 400 bis 800 ppm, vorzugsweise von 400 bis 600 ppm, und mit Glycerin oder Trimethylolpropan oder einer Glycerin-Trimethylolpropanmischung gestartete Polyoxypropylen-polyole mit einer Hydroxylzahl im Bereich von 210 bis 480 und einem Kaliumionengehalt im Bereich von 400 bis 600 ppm. Als alkalireiche Vernetzungsmittel (c) eignen sich ferner z.B. Polyoxypropylen-polyole mit einer Funktionalität von 4 bis 8, vorzugsweise 4 bis 6 und einer Hydroxylzahl von 230 bis 500, vorzugsweise von 250 bis 380, die erhalten werden unter Verwendung von Sucrose oder vorzugsweise Sorbit oder Mischungen aus Sucrose und Sorbit als Startermoleküle, wobei als Costarter zusätzlich Wasser, Propylenglykol, Glycerin oder Mischungen aus mindestens zwei der genannten Costarter mitverwendet werden können, mit der Maßgabe, daß die Polyoxyalkylen-polyole einen Alkaliionengehalt, vorzugsweise Kaliumionengehalt, von 200 bis 1000 ppm, vorzugsweise 400 bis 700 ppm besitzen. In Betracht kommen ferner Polyoxypropylen- und/oder Polyoxyethylen-polyole mit einem Alkaliionengehalt von 150 bis 800 ppm und einer Hydroxylzahl von 450 bis 750, die erhalten werden können durch Umsetzung von Pentaerythrit oder einer Mischung aus Pentaerythrit und Glycerin und/oder Trimethylolpropan,
   zweckmäßigerweise in einem Molverhältnis von Pentaerythrit zu Glycerin und/oder Trimethylolpropan von 1:1, mit 1,2-Propylenoxid oder Ethylenoxid. Als alkalireiche Vernetzungsmittel (c) verwendbar sind auch Polyoxypropylen-polyoxyethylen-polyole, die z.B. erhalten werden durch Polyaddition von 1,2-Propylenoxid und Ethylenoxid in einem Molverhaltnis von 1:1 bis 1:8, vorzugsweise von 1:1 bis 1:5 an Glycerin, Trimethylpropan oder eine Mischung aus Glycerin und Trimethylolpropan als Startermoleküle, mit einer Hydroxylzahl von 210 bis 970, vorzugsweise von 380 bis 600 und einem Alkaliionengehalt, vorzugsweise Kaliumionengehalt, von 150 bis 800 ppm, vorzugsweise von 400 bis 600 ppm, oder durch Polyaddition von 1,2-Propylenoxid und Ethylenoxid in einem Molverhaltnis von 1:1 bis 1:8, vorzugsweise von 1:1 bis 1:5 an Sucrose oder vorzugsweise Sorbit oder Mischungen aus Sucrose und Sorbit als Startermoleküle, mit einer Hydroxylzahl von 200 bis 500, vorzugsweise von 230 bis 300 und einem Alkaliionengehalt, vorzugsweise Kaliumionengehalt von 200 bis 800 ppm, vorzugsweise von 400 bis 600 ppm. Die als Vernetzungsmittel (c) beispielhaft genannten alkalireichen Polyoxyalkylen-polyole können einzeln oder in Form von Mischungen verwendet werden.
   Zur Herstellung der PU-Schaumstoffe nach dem erfindungsgemäßen Verfahren kommen die Vernetzungsmittel (c) zweckmäßigerweise in Mengen von 0,5 bis 10 Gew.-%, vorzugsweise von 1 bis 8 Gew.-% und insbesondere von 2 bis 5 Gew.-%, bezogen auf das Gewicht der Polyhydroxylverbindungen (b) zur Anwendung.
d) Zu Treibmitteln (d), welche zur Herstellung der PU-Schaumstoffe, vorzugsweise PU-Halbhartschaumstoffe, verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Polyhydroxylverbindungen (b) bzw. Mischungen aus höhermolekularen Polyhydroxylverbindungen und Kettenverlängerungsmittel.
   Im Gemisch mit Wasser oder als alleinige Treibmittel können auch physikalisch wirkende Treibmittel eingesetzt werden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie z.B. n- und iso-Pentan, vorzugsweise technische Gemische aus n-und iso-Pentanen, n- und iso-Butan, n- und iso-Propan, Cycloalkane, wie z.B. Cyclohexan und Cyclopentan, Ether, wie z.B. Furan, Dimethylether und Diethylether, Ketone, wie z.B. Aceton und Methylethylketon, Carbonsäurealkylester, wie z.B. Methylformiat, Dimethyloxalat und Ethylacetat und halogenierte Kohlenwasserstoffe, wie z.B. Methylenchlorid, Dichlormonofluormethan, Difluormethan, Difluorchlormethan, Trifluormethan, Difluorethan, Tetrafluorethan, Heptafluorpropan, 1-Chlor-2,2-difluorethan (142), 1-Chlor-1,1-difluorethan (142b) und 1-Chlor-1,2-difluorethan (142a). Auch Gemische dieser niedrigsiedenden Flüssigkeiten untereinander z.B. aus Difluorchlormethan und 142b und/oder mit anderen substituierten oder unsubstituierten Kohlenwasserstoffen können verwendet werden.
   Die erforderliche Menge bzw. die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 1 bis 25 Gew.-Teile, insbesondere 2 bis 15 Gew.-Teile pro 100 Gew.-Teile der Polyhydroxylverbindungen (b). Gegebenenfalls kann es zweckmäßig sein, die gegebenenfalls modifizierten Polyisocyanate (a) mit dem inerten physikalisch wirkenden Treibmittel zu mischen und dadurch die Viskosität zu verringern.
e) Die PU-Schaumstoffe können nach dem erfindungsgemäßen Verfahren in Abwesenheit von Katalysatoren hergestellt werden. Zweckmäßigerweise wird die Reaktion jedoch in Gegenwart von Katalysatoren (e), die die Reaktion der organischen und/oder organischen modifizierten Polyisocyanate (a) mit den Polyhydroxylverbindungen (b) und Vernetzungsmitteln (c) stark beschleunigen, durchgeführt. Als Katalysatoren in Betracht kommen z.B. Alkalimetallsalze von Monocarbonsäuren mit linearen oder verzweigten Alkylresten mit 1 bis 20 C-Atomen, vorzugsweise 1 bis 18 C-Atomen und/oder Dicarbonsäuren mit linearen oder verzweigten Alkylresten mit 2 bis 20 C-Atomen, vorzugsweise 2 bis 12 C-Atomen, wie z.B. Kaliumformiat, Kaliumacetat, Kaliumoctoat, Kaliummaleinat und Dikaliumadipat und organische Metallverbindungen, vorzugsweise organische Zinnverbindungen, wie z.B. Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinn-dilaurat, Dibutylzinn-maleat und Dioctylzinndiacetat. Derartige Katalysatoren werden z.B. in der DE-A-3 048 529 beschrieben. Als gut geeignet haben sich auch Dialkylzinn(IV)-mercaptoverbindungen erwiesen, wie z.B. Bislaurylzinn(IV)-dimercaptid.
   Die Katalysatoren werden üblicherweise in einer Menge von 0,001 bis 0,2 Gew.-Teilen, vorzugsweise 0,005 bis 0,015 Gew.-Teilen pro 100 Gew.-Teile der Aufbaukomponenten (a) bis (c) verwendet.
f) Zur Herstellung der PU-Schaumstoffe nach dem erfindungsgemäßen Verfahren finden als wesentlicher Zusatzstoff anorganische Säuren, organische Säuren oder Mischungen aus anorganischen und organischen Säuren Verwendung. Als anorganische Säuren haben sich beispielsweise Polyphosphorsäuren, ein- und mehrwertige Phosphorsäuren, vorzugsweise Triphosphorsäure und Salzsäure bewahrt. Vorzugsweise Verwendung finden organische Säuren, insbesonders solche aus der Gruppe der Monocarbonsäuren, Polycarbonsäuren, vorzugsweise Dicarbonsäuren und aromatischen Sulfonsäuren. Als organische Säuren beispielhaft genannt seien Mono- und Dicarbonsäuren, wie z.B. Ameisensäure, Essigsäure, Propionsäure und vorzugsweise Ricinolsäure, Oxalsäure, Bernsteinsäure, Maleinsäure, Fumarsäure, Weinsäure, Citronensäure, Adipinsäure, Benzoesäure, Phthalsäure, Terephthalsäure und Isophthalsäure, und Sulfonsäuren wie z.B. Benzolsulfonsäure und p-Toluolsulfonsäure. Die anorganischen und/oder organischen Säuren werden in Abhängigkeit von ihrem pKs-Wert und Molekulargewicht sowie der Basizität der Polyhydroxylverbindungen (b) Üblicherweise in einer Menge von 0,1 bis 20 Gew.-Teilen, bezogen auf 100 Gew.-Teile Polyhydroxylverbindung (b) verwendet, wobei die exakten Gewichtsmengen durch einfache Handversuche ermittelt werden können.
   Bei Verwendung von mindestens einem Polyoxyalkylen-polyol (b1) als Polyhydroxylverbindung (b) hat es sich als vorteilhaft erwiesen, den Zusatzstoff (f) in einer separaten Reaktionsstufe in das Polyoxyalkylen-polyol (b1) einzubringen und die erhaltene Mischung der A-Komponente einzuverleiben.
g) Der Reaktionsmischung zur Herstellung der PU-Schaumstoffe, vorzugsweise PU-Halbhartschaumstoffe, können gegebenenfalls zusätzlich Hilfsmittel (g) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. Ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxyalkylen-Mischpolymerisate und andere Organopolysiloxane, oxethylierte Alkylphenole, oxethylierte Fettalkohole, Paraffinöle, Ricinusöl- bzw. Ricinolsaureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden Üblicherweise in Mengen von 0,01 bis 5 Gew.-Teilen, bezogen auf 100 Gew.-Teile der Polyhydroxylverbindungen (b) und Vernetzungsmittel (c), angewandt.
   Als Füllstoffe, insbesondere verstärkend wirkende Füllstoffe, sind die an sich bekannten, Üblichen organischen und anorganischen Füllstoffe und Verstärkungsmittel, zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Zeolithe, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.
   Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie roter Phosphor, Aluminiumoxidhydrat, Antimontrioxid, Ammoniumsulfat, Ammoniumpolyphosphat und Calciumsulfat, Blahgraphit, Harnstoff oder Cyanursaurederivate, wie z.B. Melamin, Melamincyanurat oder Mischungen aus mindestens zwei Flammschutzmitteln, wie z.B. Ammoniumpolyphosphaten und Melamin sowie gegebenenfalls Blahgraphit und/oder Stärke zum Flammfestmachen der erfindungsgemäß hergestellten PU-Schaumstoffe, verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.
   Nähere Angaben über die oben genannten anderen üblichen Hilfsmittel sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Schaumstoffe, vorzugsweise der PU-Halbhartschaumstoffe, werden die organischen, gegebenenfalls modifizierten Polyisocyanate (a), die Polyhydroxylverbindungen (b) und Vernetzungsmittel (c) in Gegenwart der Treibmittel (d), gegebenenfalls Katalysatoren (e) und Zusatzstoffe (f) sowie gegebenenfalls Hilfsmittel (g) üblicherweise bei Temperaturen von 0 bis 120°C, vorzugsweise 15 bis 100°C und insbesondere 18 bis 80°C in solchen Mengen zur Reaktion gebracht, daß pro NCO-Gruppe vorteilhafterweise 0,5 bis 2, vorzugsweise 0,8 bis 1,3 und insbesondere ungefähr eine Hydroxylgruppe gebunden an (b) und (c) vorliegen. Bei ausschließlicher oder teilweiser Verwendung von Wasser als Treibmittel hat es sich als zweckmäßig erwiesen, ein Verhältnis von Äquivalente Wasser zu Äquivalente NCO-Gruppe im Bereich von vorteilhafterweise 0,5 bis 5:1, vorzugsweise 0,7 bis 0,95:1 und insbesondere 0,75 bis 0,85:1 einzustellen. Zur Herstellung von PU-Schaumstoffen mit Isocyanuratgruppen hat sich z.B. ein Verhältnis von NCO-:OH-Gruppen von 2 bis 25:1, vorzugsweise 2 bis 10:1 und insbesondere 2 bis 5:1 bewährt.

Die PU-Schaumstoffe, vorzugsweise die PU-Halbhartschaumstoffe, werden zweckmäßigerweise nach dem one shot-Verfahren durch Vermischen von zwei Komponenten A und B hergestellt, wobei üblicherweise die Ausgangskomponenten (b) bis (d) und (f) sowie gegebenenfalls (e) und (g) zu der sogenannten A-Komponente vereinigt und als B-Komponente die organischen und/oder modifizierten organischen Polyisocyanate (a) gegebenenfalls im Gemisch mit inerten, physikalisch wirkenden Treibmitteln verwendet werden. Die A- und B-Komponenten müssen vor Herstellung der PU-Schaumstoffe nur noch intensiv gemischt werden. Die Reaktionsmischung kann in offenen oder geschlossenen Formwerkzeugen verschäumt und aushärten gelassen werden. Ferner können vorgefertigte Bezugsmaterialien zu Formteilen hinterschäumt werden.

Das erfindungsgemäße Verfahren eignet sich insbesondere auch zur Herstellung von PU-Formschaumstoffen. Die Reaktionsmischung wird hierzu mit einer Temperatur von 15 bis 80°C, vorzugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man üblicherweise drucklos oder unter Verdichtung z.B. bei Verdichtungsgraden von 1,1 bis 8, vorzugsweise von 2 bis 6 und insbesondere 2,2 bis 4 in dem geschlossenen Formwerkzeug aushärten.

Die nach dem erfindungsgemäßen Verfahren hergestellten PU-Schaumstoffe besitzen üblicherweise Dichten von 0,025 bis 0,25 g/cm³, vorzugsweise von 0,035 bis 0,08 g/cm³, wobei die Formschaumstoffe, beispielsweise solche mit einem zelligen Kern und einer verdichteten Randzone in Abhängigkeit vom angewandten Verdichtungsgrad auch Dichten von 0,08 bis 0,75 g/cm³, vorzugsweise von 0,2 bis 0,6 g/cm³ aufweisen können. Die nach dem erfindungsgemäßen Verfahren hergestellten PU-Schaumstoffe sind, wie bereits ausgeführt wurde, im wesentlichen geruchlos, zeigen eine gleichmäßige, im wesentlichen lunkerfreie Zellstruktur und besitzen ein gleichmäßig hohes mechanisches Eigenschaftsniveau.

Die Reaktionsmischungen zur Herstellung der PU-Schaumstoffe finden z.B. Verwendung in der Fahrzeug-, beispielsweise Automobil-, Flugzeug- und Schiffsbauindustrie, der Kühlmöbel- und Bauindustrie zum Ausschäumen und Hinterschäumen von Hohlräumen, z.B. von Armaturen- und Schalttafeln, als Zwischenschicht für Sandwichelemente oder zum Ausschäumen von Kühlschrank- und Kühltruhengehäuse. Die PU-Schaumstoffe eignen sich als Isoliermaterialien, z.B. als Isolierschalen für Rohrleitungen oder Heizungen. Sie finden ferner Verwendung als Wandverkleidungen, Gehäuseteile, Polstermaterialien, Armlehnen, Kopfstützen, Sonnenblenden, Ablagebehälter oder -fächer und Sicherheitsabdeckungen.

### Beispiele

### Beispiel 1

### A-Komponente: Mischung, bestehend aus

- 43,2 Gew.-Teilen: eines mit N,N-Dimethyl-dipropylentriamin gestarteten Polyoxypropylen(86,5 Gew.-%)-polyoxyethylen(13,5 Gew.-%)-polyols mit einer Hydroxylzahl von 35,
- 43,8 Gew.-Teilen: eines mit einer Startermolekülmischung aus Glycerin und Wasser im Gewichtsverhältnis 1:0,98 gestarteten Blockpolyoxypropylen-polyoxyethylenpolyols mit einer Hydroxylzahl von 30, einem Gehalt an endständig gebundenen Ethylenoxideinheiten von 5,9 Gew.-%, bezogen auf das Gewicht der Polyoxypropyleneinheiten, und ca. 70 % primären Hydroxylgruppen,
- 5,0 Gew.-Teilen: eines Pfropf-polyether-polyols mit einer Hydroxylzahl von 28, hergestellt durch eine radikalische in-situ Polymerisation aus einem mit Glycerin gestarteten Polyoxypropylen-polyoxyethylenpolyol als Pfropfgrundlage und einer Mischung aus Styrol und Acrylnitril im Gewichtsverhältnis 12:8 zur Bildung der Pfropfauflage (Polyurax® U 26-03 der Firma BP, Deutschland),
- 4,0 Gew.-Teilen: eines mit Glycerin gestarteten Polyoxyethylenpolyols mit einer Hydroxylzahl von 524 und einem Kaliumionengehalt von 470 ppm,
- 1,6 Gew.-Teilen: Ricinolsäure,
- 2,0 Gew.-Teilen: Wasser und
- 0,4 Gew.-Teilen: einer 40 gew.-%igen Lösung von Kaliumacetat in Ethylenglykol.

### B-Komponente:

Mischung aus Diphenylmethan-diisocyanaten und Polyphenyl-polymethylen-polyisocyanaten (Roh-MDI) mit einem NCO-Gehalt von 31,3 Gew.-%, die, bezogen auf das Gesamtgewicht, enthielt: 37 Gew.-% 4,4'-MDI und 2 Gew.-% 2,4'-MDI.

Zur Hinterschäumung einer Armaturentafel wurde eine Deckfolie aus PVC/ABS in ein auf 40 bis 43°C temperiertes metallisches Formwerkzeug eingelegt.

Zur Hinterschäumung fand eine Hennecke-Schäumapparatur mit einem Mischkopf MQ, der Drosseleinstellung 5, Düsen mit einem Durchmesser von 1,3 mm für die A-Komponente und 0,8 mm für die B-Komponente sowie einer Austragsleistung von 223 g/Sek. Verwendung. Die Schußzeit betrug 4,2 bis 5,05 Sek., was einer Austragsleistung von 920 bis 1126 g entspricht.

Zur Herstellung der Hinterschäumung wurden die A-Komponente mit einer Temperatur von 33°C unter einem Druck von 200 bar und die B-Komponente mit einer Temperatur von 30°C und einem Druck von 200 bar im Gewichtsverhältnis 100:45 gemischt, die Reaktionsmischung in das geschlossene Formwerkzeug eingespritzt und dort aufschäumen gelassen. Das Formteil wurde nach 8 Minuten entformt.

Die Reaktionsmischung besaß eine Topfzeit von 11 Sek. und eine Steigzeit von 73 Sek. Der Schaumstoff hatte eine freigeschäumte Dichte von 0,069 g/cm³.

Nach dem genannten Verfahren wurden 10 Armaturentafeln lunkerfrei hinterschäumt. Nach einer Lagerung bei 80°C, 1 Stunde, konnten an den Armaturentafeln keine Einfallstellen ermittelt werden.

### Beispiel 2

### A-Komponente: Mischung, bestehend aus

- 12,6 Gew.-Teilen: eines mit N,N-Dimethyl-dipropylentriamin gestarteten Polyoxypropylen(95 Gew.-%)-polyoxyethylen(5 Gew.-%)-polyols mit einer Hydroxylzahl von 119,
- 30,8 Gew.-Teilen: eines mit Glycerin gestarteten Polyoxypropylen(86 Gew.-%)-polyoxyethylen(14 Gew.-%)-polyols mit einer Hydroxylzahl von 28,
- 43,8 Gew.-Teilen: eines mit einer Startermolekülmischung aus Glycerin und Wasser im Gewichtsverhältnis 1:0,98 gestarteten Blockpolyoxypropylen-polyoxyethylenpolyols mit einer Hydroxylzahl von 30, einem Gehalt an endständig gebundenen Ethylenoxideinheiten von 5,9 Gew.-%, bezogen auf das Gewicht der Polyoxypropyleneinheiten, und ca. 70 % primären Hydroxylgruppen,
- 5,0 Gew.-Teilen: eines Pfropf-polyether-polyols mit einer Hydroxylzahl von 28, hergestellt durch eine radikalische in-situ Polymerisation aus einem mit Glycerin gestarteten Polyoxypropylen-polyoxyethylenpolyol als Pfropfgrundlage und einer Mischung aus Styrol und Acrylnitril im Gewichtsverhältnis 12:8 zur Bildung der Pfropfauflage (Polyurax® U 26-03, der Firma BP, Deutschland),
- 4,0 Gew.-Teilen: eines mit Glycerin gestarteten Polyoxyethylenpolyols mit einer Hydroxylzahl von 524 und einem Kaliumionengehalt von 470 ppm,
- 1,6 Gew.-Teilen: Ricinolsäure und
- 2,2 Gew.-Teilen: Wasser.

### B-Komponente: analog Beispiel 1.

In ein auf 50°C temperiertes, metallisches Formwerkzeug mit den inneren Abmessungen 20 x 20 x 4 cm wurde eine grau gefärbte Folie aus einem PVC/ABS-Polymerisatgemisch in der Weise eingelegt, daß die Grundfläche des Formwerkzeugs vollständig bedeckt war.

Das Formwerkzeug wurde verschlossen, in den Formwerkzeughohlraum die schäumfähige PU-Reaktionsmischung eingefüllt und diese dort aufgeschäumt und ausgehärtet.

Das gebildete Verbundelement wurde nach 3 Minuten entformt. Nach 24-stündiger Lagerung bei 23°C wurde der Verbundkörper in mehrere Prüfkörper zersägt und diese einzeln in Glasflaschen bei 120°C in einem Umlufttrockenschrank gelagert.

Nach jeweils 300 und 500 Stunden Lagerung bei 120°C wurden die Prüfkörper entnommen und die als Deckschicht verwendete Folie vom PU-Schaumstoff mit Hilfe eines Messers abgetrennt.

An der Folie und dem PU-Schaumstoff wurde im Zugversuch nach DIN 53 571 die Reißfestigkeit und Reißdehnung gemessen.

Bei den nachfolgend aufgelisteten Meßergebnissen wurden in der Zeile "0 Stunden" die Vergleichswerte für die eingesetzte Folie und den unbeschichteten PU-Schaumstoff nach der 24-stündigen Lagerung bei 23°C genannt.

| Folienmaterial der Deckschicht aus einem PVC/ABS-Polymerisatgemisch, grau eingefärbt | Lagerung bei 120°C [Stdn] | Reißfestigkeit [N/mm²] | Reißdehnung [%] |
|---|---|---|---|
| | 0 | 14,6 | 160 |
| | 300 | 15,6 | 100 |
| | 500 | 18 | 90 |

Zur Herstellung des PU-Schaumstoffs wurden

| | |
|---|---|
| 100 | Gew.-Teile der A-Komponente und |
| 44,38 | Gew.-Teile der B-Komponente |

bei 23°C intensiv durch Rühren gemischt und 250 g der Reaktionsmischung in das Formwerkzeug eingefüllt und dort aufgeschäumt und ausgehärtet.

Zusätzlich wurde die Reaktionsmischung in einem offenen Kunststoffbecher aufgeschäumt und hierbei folgende Schäumdaten gemessen:

| | |
|---|---|
| Startzeit | 23 Sek. |
| Abbindezeit | 87 Sek. |
| Steigzeit | 118 Sek. |

Die freigeschäumte Schaumstoffdichte betrug 0,067 g/cm³.

An dem freigeschäumten PU-Schaumstoff wurden folgende mechanische Eigenschaften ermittelt:

| Lagerung des PU-Schaumstoffs bei 120°C [Stdn] | 0 | 300 | 500 |
|---|---|---|---|
| Reißfestigkeit [N/mm²] | 0,25 | 0,21 | 0,20 |
| Reißdehnung [%] | 54 | 34 | 28 |

### Beispiele 3 bis 5

### Allgemeine Herstellungsvorschrift:

### Herstellung einer Mischung aus einem Polyoxyalkylen-polyol (b1) und einem Zusatzstoff (f)

Ein Mol eines mit N,N-Dimethyl-dipropylen-triamin gestarteten Polyoxypropylen (86,5 Gew.-%)-polyoxyethylen (13,5 Gew.-%)-polyols mit einer Hydroxylzahl von 35 wurde unter Rühren bei 23°C mit einem Zusatzstoff (f) gemischt, die erhaltene Mischung auf 80°C erwärmt und bei dieser Temperatur 2 Stunden lang gerührt. Falls mit der Säure in die Mischung Kristallwasser eingebracht wurde, wurde dieses anschließend bei 80°C unter vermindertem Druck abdestilliert.

Als Zusatzstoff (f) fanden folgende Säuren und Sauremengen Verwendung

| | |
|---|---|
| Mischung (I) | 0,5 mol Ameisensäure |
| Mischung (II) | 0,5 mol Maleinsäure |
| Mischung (III) | 0,5 mol Citronensäuremonohydrat |
| Mischung (IV) | 0,25 mol eines Monoalkylphosphorsäureesters (Korantin® LUB der BASF Aktiengesellschaft) |

Zur Herstellung der PU-Schaumstoffe fand als A-Komponente eine Mischung Verwendung, die bestand aus
- 45,0 Gew.-Teilen: einer der Mischungen (I) bis (III)
- 43,8 Gew.-Teilen: eines mit einer Startermolekülmischung aus Glycerin und Wasser im Gewichtsverhältnis 1:0,98 gestarteten Blockpolyoxypropylen-polyoxyethylenpolyols mit einer Hydroxylzahl von 30, einem Gehalt an endständig gebundenen Ethylenoxideinheiten von 5,9 Gew.-%, bezogen auf das Gewicht der Polyoxypropyleneinheiten, und ca. 70 % primären Hydroxylgruppen,
- 5,0 Gew.-Teilen: eines Pfropf-polyether-polyols mit einer Hydroxylzahl von 28, hergestellt durch eine radikalische in-situ Polymerisation aus einem mit Glycerin gestarteten Polyoxypropylen-polyoxyethylenpolyol als Pfropfgrundlage und einer Mischung aus Styrol und Acrylnitril im Gewichtsverhältnis 12:8 zur Bildung der Pfropfauflage (Polyurax® U 26-03 der Firma BP, Deutschland),
- 4,0 Gew.-Teilen: eines mit Glycerin gestarteten Polyoxyethylenpolyols mit einer Hydroxylzahl von 524 und einem Kaliumionengehalt von 470 ppm,
- 1,7 Gew.-Teilen: Wasser und
- 0,5 Gew.-Teilen: einer 40 gew.-%igen waßrigen Kaliumformiatlösung.

### B-Komponente: analog Beispiel 1

Die Hinterschäumung einer grau eingefärbten Folie aus einem PVC/ABS-Polymerisatgemisch wurde analog den Angaben des Beispiels 2 durchgeführt.

An der Folie und dem freigeschäumten PU-Schaumstoff wurden analog Beispiel 2 im Zugversuch nach DIN 53 571 die Reißfestigkeit und die Reißdehnung gemessen.

### Beispiel 3

In der A-Komponente fand die obengenannte Mischung (I) Verwendung.

Zur Herstellung des PU-Schaumstoffs wurden

| | |
|---|---|
| 100 | Gew.-Teile der A-Komponente und |
| 42,34 | Gew.-Teile der B-Komponente |

bei 23°C intensiv durch Rühren gemischt und 250 g der Reaktionsmischung in das Formwerkzeug eingefüllt und dort aufgeschäumt und ausgehärtet.

Meßergebnisse: gemessen am Folienmaterial der Deckschicht:

| Folie aus einem PVC/ABS-Polymerisatgemisch, grau eingefärbt | Lagerung bei 120°C [Stdn] | Reißfestigkeit [N/mm²] | Reißdehnung [%] |
|---|---|---|---|
| | 0 | 12,8 | 167 |
| | 300 | 17,8 | 120 |
| | 500 | 19,4 | 90 |

am freigeschaumten PU-Schaumstoff:

| | |
|---|---|
| Startzeit | 23 Sek. |
| Abbindezeit | 87 Sek. |
| Steigzeit | 121 Sek. |

PU-Schaumstoffdichte (freigeschäumt) 0,075 g/cm³.

| Lagerung des PU-Schaumstoffs bei 120°C [Stdn] | 0 | 300 | 500 |
|---|---|---|---|
| Reißfestigkeit [N/mm²] | 0,22 | 0,21 | 0,22 |
| Reißdehnung [%] | 64 | 36 | 34 |

### Beispiel 4

In der A-Komponente fand die obengenannte Mischung (II) Verwendung.

Zur Herstellung des PU-Schaumstoffs wurden

| | |
|---|---|
| 100 | Gew.-Teile der A-Komponente und |
| 42,31 | Gew.-Teile der B-Komponente |

bei 23°C intensiv durch Rühren gemischt und 250 g der Reaktionsmischung in das Formwerkzeug eingefüllt und dort aufgeschäumt und ausgehärtet.

Meßergebnisse: gemessen am Folienmaterial der Deckschicht:

| Folie aus einem PVC/ABS-Polymerisatgemisch, grau eingefärbt | Lagerung bei 120°C [Stdn] | Reißfestigkeit [N/mm²] | Reißdehnung [%] |
|---|---|---|---|
| | 0 | 12 | 162 |
| | 300 | 15 | 102 |
| | 500 | 18 | 80 |

am freigeschäumten PU-Schaumstoff:

| | |
|---|---|
| Startzeit | 23 Sek. |
| Abbindezeit | 115 Sek. |
| Steigzeit | 165 Sek. |

PU-Schaumstoffdichte (freigeschaumt) 0,074 g/cm³.

| Lagerung des PU-Schaumstoffs bei 120°C [Stdn] | 0 | 300 | 500 |
|---|---|---|---|
| Reißfestigkeit [N/mm²] | 0,21 | 0,18 | 0,12 |
| Reißdehnung [%] | 65 | 35 | 23 |

### Beispiel 5

In der A-Komponente fand die obengenannte Mischung (III) Verwendung.

Zur Herstellung des PU-Schaumstoffs wurden

| | |
|---|---|
| 100 | Gew.-Teile der A-Komponente und |
| 42,99 | Gew.-Teile der B-Komponente |

bei 23°C intensiv durch Rühren gemischt und 250 g der Reaktionsmischung in das Formwerkzeug eingefüllt und dort aufgeschäumt und ausgehärtet.

Meßergebnisse: gemessen am Folienmaterial der Deckschicht:

| Folie aus einem PVC/ABS-Polymerisatgemisch, grau eingefärbt | Lagerung bei 120°C [Stdn] | Reißfestigkeit [N/mm²] | Reißdehnung [%] |
|---|---|---|---|
| | 0 | 13,0 | 158 |
| | 300 | 17,3 | 140 |
| | 500 | 18,2 | 80 |

am freigeschaumten PU-Schaumstoff:

| | |
|---|---|
| Startzeit | 24 Sek. |
| Abbindezeit | 87 Sek. |
| Steigzeit | 126 Sek. |

PU-Schaumstoffdichte (freigeschäumt) 0,0745 g/cm³.

| Lagerung des PU-Schaumstoffs bei 120°C [Stdn] | 0 | 300 | 500 |
|---|---|---|---|
| Reißfestigkeit [N/mm²] | 0,2 | 0,1 | 0,1 |
| Reißdehnung [%] | 62 | 43 | 22 |

### Beispiel 6

### A-Komponente: Mischung, bestehend aus

- 22,0 Gew.-Teilen: eines mit N,N-Dimethyl-dipropylentriamin gestarteten Polyoxypropylen(86,5 Gew.-%)-polyoxyethylen(13,5 Gew.-%)-polyols mit einer Hydroxylzahl von 35,
- 22,0 Gew.-Teilen: der unter Beispiele 3 bis 5, allgemeine Herstellungsvorschrift, beschriebenen Mischung (IV),
- 43,8 Gew.-Teilen: eines mit einer Startermolekülmischung aus Glycerin und Wasser im Gewichtsverhältnis 1:0,98 gestarteten Blockpolyoxypropylen-polyoxyethylenpolyols mit einer Hydroxylzahl von 30, einem Gehalt an endständig gebundenen Ethylenoxideinheiten von 5,9 Gew.-%, bezogen auf das Gewicht der Polyoxypropyleneinheiten, und ca. 70 % primären Hydroxylgruppen,
- 5,0 Gew.-Teilen: eines Pfropf-polyether-polyols mit einer Hydroxylzahl von 28, hergestellt durch eine radikalische in-situ Polymerisation aus einem mit Glycerin gestarteten Polyoxypropylen-polyoxyethylenpolyol als Pfropfgrundlage und einer Mischung aus Styrol und Acrylnitril im Gewichtsverhältnis 12:8 zur Bildung der Pfropfauflage (Polyurax® U 26-03 der Firma BP, Deutschland),
- 4,0 Gew.-Teilen: eines mit Glycerin gestarteten Polyoxyethylenpolyols mit einer Hydroxylzahl von 524 und einem Kaliumionengehalt von 470 ppm,
- 0,8 Gew.-Teilen: Ricinolsaure
- 1,4 Gew.-Teilen: Wasser und
- 1,0 Gew.-Teilen: einer 40 gew.-%igen wäßrigen Kaliumformiatlösung

### B-Komponente: analog Beispiel 1

Die Hinterschäumung einer grau eingefärbten Folie aus einem PVC/ ABS-Polymerisatgemisch wurde analog den Angaben des Beispiels 2 durchgeführt.

Zur Herstellung des PU-Schaumstoffs wurden

| | |
|---|---|
| 100 | Gew.-Teile der A-Komponente und |
| 42,64 | Gew.-Teile der B-Komponente |

bei 23°C intensiv durch Rühren gemischt und 250 g der Reaktionsmischung in das Formwerkzeug eingefüllt und dort aufgeschäumt und ausgehärtet.

An der Folie und dem freigeschäumten PU-Schaumstoff wurden analog Beispiel 2 die folgenden mechanischen Eigenschaften gemessen:

Folienmaterial der Deckschicht:

| Folie aus einem PVC/ABS-Polymerisatgemisch, grau eingefärbt | Lagerung bei 120°C [Stdn] | Reißfestigkeit [N/mm²] | Reißdehnung [%] |
|---|---|---|---|
| | 0 | 11,0 | 160 |
| | 300 | 13,3 | 119 |
| | 500 | 13,0 | 90 |

freigeschäumter PU-Schaumstoff:

| | |
|---|---|
| Startzeit | 25 Sek. |
| Abbindezeit | 95 Sek. |
| Steigzeit | 142 Sek. |

PU-Schaumstoffdichte (freigeschaumt) 0,0768 g/cm³.

| Lagerung des PU-Schaumstoffs bei 120°C [Stdn] | 0 | 300 | 500 |
|---|---|---|---|
| Reißfestigkeit [N/mm²] | 0,2 | 0,11 | 0,11 |
| Reißdehnung [%] | 159 | 119 | 100 |

## Patentansprüche

1. Verfahren zur Herstellung von Polyurethan-Schaumstoffen durch Umsetzung von
a) organischen Polyisocyanaten mit
b) Polyhydroxylverbindungen mit mindestens 2 reaktiven Wasserstoffatomen und
c) Vernetzungsmitteln
in Gegenwart von
d) Treibmitteln,
e) gegebenenfalls Katalysatoren,
f) Zusatzstoffen und
g) gegebenenfalls Hilfsmitteln,
dadurch gekennzeichnet, daß man als Vernetzungsmittel (c) mindestens ein Polyoxyalkylen-polyol mit einer Funktionalität von 3 bis 8, einer Hydroxylzahl von 200 bis 1300 und einem Gehalt an Alkaliionen von 150 bis 1200 ppm und als Zusatzstoff (f) eine anorganische und/oder organische Säure verwendet.

2. Verfahren nach Anspruch 1, dadurch gekennzeichnet, daß man als Polyhydroxylverbindungen (b) mindestens ein Polyoxyalkylen-polyol (b1) mit einer Funktionalität von 2 bis 4 und einer Hydroxylzahl von 14 bis 160 verwendet, das hergestellt wird durch Polyaddition von Ethylenoxid, 1,2-Propylenoxid oder Mischungen aus Ethylenoxid und 1,2-Propylenoxid an mindestens ein Startermolekül der Formel 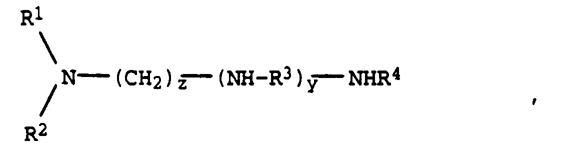 in der bedeuten
R¹ und R² gleiche oder verschiedene, lineare oder verzweigte C₁- bis C₄-Alkylreste,
beide Reste gemeinsam einen C₄- bis C₆-Cycloalkylenrest, der anstelle einer Methylengruppe ein -O- oder -NR⁵- Brückenglied enthalten kann, in dem R⁵ ein C₁- bis C₄-Alkylrest ist, oder
gleiche oder verschiedene Dialkylaminoalkylenreste der Formel 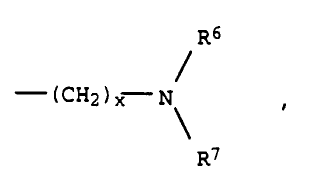 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann und x eine ganze Zahl von mindestens 3 ist,
z eine ganze Zahl von mindestens 3,
R³ eine C₂- bis C₄-Alkylengruppe,
y null oder eine Zahl von 1 bis 3 und
R⁴ Wasserstoff oder einen C₁- bis C₄-Alkylrest mit der Maßgabe, daß für y gleich null R⁴ Wasserstoff ist.

3. Verfahren nach Anspruch 1, dadurch gekennzeichnet, daß man als Polyhydroxylverbindungen (b) mindestens ein Polyoxyalkylen-polyol (b1) mit einer Funktionalität von 2 bis 3 und einer Hydroxylzahl von 14 bis 160 verwendet, das hergestellt wird durch Polyaddition mindestens eines Alkylenoxids an ein Startermolekül, ausgewählt aus der Gruppe N,N-Dimethyl-diaminopropan-1,3, N,N-Dimethyl-diaminobutan-1,4 und N,N-Dimethyldipropylentriamin.

4. Verfahren nach Anspruch 1, dadurch gekennzeichnet, daß man als Polyhydroxylverbindungen (b) mindestens ein Blockpolyoxypropylen-polyoxyethylen-polyol (b2) mit einer Hydroxylzahl von 14 bis 65 und einem Gehalt an endständig gebundenen Ethylenoxideinheiten von 2 bis 9 Gew.-%, bezogen auf das Gewicht der Polyoxypropyleneinheiten, verwendet, das hergestellt wird durch anionische Polyaddition bei erhöhten Temperaturen von 1,2-Propylenoxid an eine Startermolekülmischung mit einer Funktionalität von 2,3 bis 2,8 aus Wasser und Glycerin und/ oder Trimethylolpropan und Polyaddition von Ethylenoxid an das erhaltene Polyoxypropylenaddukt.

5. Verfahren nach einem der Ansprüche 1 bis 4, dadurch gekennzeichnet, daß man als Polyhydroxylverbindungen (b) eine Mischung verwendet, die (b1) und (b2) enthält.

6. Verfahren nach einem der Ansprüche 1 bis 5, dadurch gekennzeichnet, daß man als Polyhydroxylverbindungen (b) eine Mischung verwendet, die, bezogen auf das Gesamtgewicht, enthält
2 bis 50 Gew.-% (b1) und
10 bis 50 Gew.-% (b2).

7. Verfahren nach einem der Ansprüche 1 bis 6, dadurch gekennzeichnet, daß das Vernetzungsmittel (c) aus mindestens einem mit Glycerin und/oder Trimethylolpropan gestarteten Polyoxypropylen-, Polyoxyethylen- oder Polyoxypropylen-polyoxyethylen-polyol mit einer Hydroxylzahl im Bereich von 210 bis 970 und einem Alkaliionengehalt von 150 bis 800 ppm besteht.

8. Verfahren nach einem der Ansprüche 1 bis 7, dadurch gekennzeichnet, daß die als Zusatzstoff (f) verwendeten anorganischen Säuren ausgewählt sind aus der Gruppe Salzsäure und Phosphorsäuren und die organischen Säuren ausgewählt sind aus der Gruppe der Monocarbonsäuren, Polycarbonsäuren und aromatischen Sulfonsäuren.

9. Verfahren nach einem der Ansprüche 1 bis 8, dadurch gekennzeichnet, daß man als Zusatzstoff (f) Ricinolsäure verwendet.

10. Verfahren nach einem der Ansprüche 1 bis 9, dadurch gekennzeichnet, daß man als Treibmittel (d) Wasser verwendet.

## Claims

1. A process for the preparation of polyurethane foams by reacting
a) organic polyisocyanates with
b) polyhydroxyl compounds containing at least 2 reactive hydrogen atoms and
c) crosslinking agents,
in the presence of
d) blowing agents,
e) if desired catalysts,
f) additives and
g) if desired auxiliaries,
wherein the crosslinking agents (c) are at least one polyoxyalkylene-polyol having a functionality of from 3 to 8, a hydroxyl number of from 200 to 1300 and a content of alkali metal ions of from 150 to 1200 ppm, and the additive (f) is an inorganic and/or organic acid.

2. A process as claimed in claim 1, wherein the polyhydroxyl compounds (b) are at least one polyoxyalkylene-polyol (b1) having a functionality of from 2 to 4 and a hydroxyl number of from 14 to 160 which is prepared by polyaddition of ethylene oxide, 1,2-propylene oxide or mixtures of ethylene oxide and 1,2-propylene oxide onto at least one initiator molecule of the formula 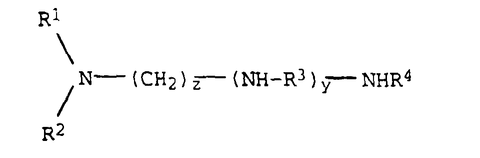 where
R¹ and R² are identical or different, linear or branched C₁- to C₄-alkyl, the two radicals together are C₄- to C₆-cycloalkylene, in which a methylene group may be replaced by an -O- or -NR⁵- bridge, where R⁵ is C₁- to C₄-alkyl, or
R¹ and R² are identical or different dialkylaminoalkylene of the formula 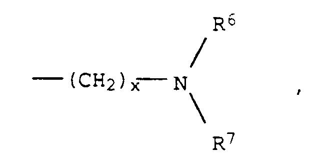 where R⁶ and R⁷ are identical or different, linear or branched C₁- to C₄-alkyl, or the two radicals together are C₄- to C₆-cycloalkylene, in which a methylene group may be replaced by an -O- or -NR⁵- bridge, and x is an integer of at least 3,
z is an integer of at least 3,
R³ is C₂- to C₄-alkylene,
y is zero or a number from 1 to 3, and
R⁴ is hydrogen or C₁- to C₄-alkyl, with the proviso that R⁴ is hydrogen if y is zero.

3. A process as claimed in claim 1, wherein the polyhydroxyl compounds (b) are at least one polyoxyalkylene-polyol (b1) having a functionality of from 2 to 3 and a hydroxyl number of from 14 to 160 which is prepared by polyaddition of at least one alkylene oxide onto an initiator molecule selected from the group consisting of N,N-dimethyl-1,3-diaminopropane, N,N-dimethyl-1,4-diaminobutane and N,N-dimethyldipropylenetriamine.

4. A process as claimed in claim 1, wherein the polyhydroxyl compounds (b) are at least one block polyoxypropylene-polyoxyethylene-polyol (b2) having a hydroxyl number of from 14 to 65 and a content of terminal ethylene oxide units of from 2 to 9 % by weight, based on the weight of the polyoxypropylene units, which is prepared by anionic polyaddition at elevated temperature of 1,2-propylene oxide onto an initiator molecule mixture having a functionality of from 2.3 to 2.8 comprising water and glycerol and/or trimethylolpropane, and polyaddition of ethylene oxide onto the resultant polyoxypropylene adduct.

5. A process as claimed in any of claims 1 to 4, wherein the polyhydroxyl compounds (b) are a mixture containing (b1) and (b2).

6. A process as claimed in any of claims 1 to 5, wherein the polyhydroxyl compounds (b) are a mixture containing, based on the total weight,
from 2 to 50 % by weight of (b1) and
from 10 to 50 % by weight of (b2).

7. A process as claimed in any of claims 1 to 6, wherein the crosslinking agent (c) comprises at least one glycerol- and/or trimethylolpropane-initiated polyoxypropylene-, polyoxyethylene- or polyoxypropylene-polyoxyethylene-polyol having a hydroxyl number in the range from 210 to 970 and an alkali metal ion content of from 150 to 800 ppm.

8. A process as claimed in any of claims 1 to 7, wherein the inorganic acids used as additive (f) are selected from the group consisting of hydrochloric acid and phosphoric acids, and the organic acids are selected from the group consisting of monocarboxylic acids, polycarboxylic acids and aromatic sulfonic acids.

9. A process as claimed in any of claims 1 to 8, wherein the additive (f) is ricinoleic acid.

10. A process as claimed in any of claims 1 to 9, wherein the blowing agent (d) is water.

## Revendications

1. Procédé de fabrication de mousses de polyuréthanne par la réaction
a) de polyisocyanates organiques avec
b) des composés polyhydroxylés comportant au moins 2 atomes d'hydrogène réactifs et
c) des agents de réticulation,
en présence
d) d'agents porogènes,
e) éventuellement de catalyseurs,
f) d'additifs et
g) éventuellement d'adjuvants ou agents auxiliaires,
caractérisé en ce que l'on utilise, à titre d'agent de réticulation (c) au moins un polyoxyalkylènepolyol d'une fonctionnalité de 3 à 8, d'un indice d'hydroxyle de 200 à 1300 et d'une teneur en ions alcalins de 150 à 1200 ppm et, à titre d'additif (f), un acide inorganique et/ou organique.

2. Procédé suivant la revendication 1, caractérisé en ce que, à titre de composés polyhydroxylés (b), on utilise au moins un polyoxyalkylènepolyol (b1) d'une fonctionnalité de 2 à 4 et d'un indice d'hydroxyle de 14 à 160, que l'on prépare par la polyaddition de l'oxyde d'éthylène, de l'oxyde de 1,2-propylène, ou de mélanges de l'oxyde d'éthylène et de l'oxyde de 1,2-propylène, sur au moins une molécule amorceuse de la formule 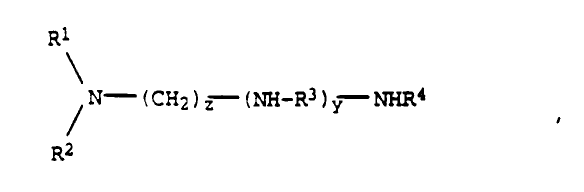 dans laquelle
R¹ et R² représentent des radicaux alkyle en C₁ à C₄, linéaires ou ramifiés, identiques ou différents,
les deux restes forment en commun un radical cycloalkyle en C₄ à C₆, qui peut contenir un élément de pont -O- ou -NR⁵- au lieu d'un groupe méthylène, où R⁵ représente un radical alkyle C₁ à C₄, ou
des restes dialkylaminoalkylène, identiques ou différents, de la formule 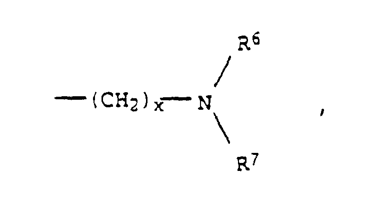 dans laquelle R⁶ et R⁷ représentent des restes alkyle en C₁ à C₄, linéaires ou différents, identiques ou différents, ou bien les deux restes forment en commun un reste cycloalkylène en C₄ à C₆, qui peut contenir un élément de pontage -O- ou -NR⁵- au lieu d'un radical méthylène et x représente un nombre entier au moins égal à 3,
z représente un nombre entier au moins égal à 3,
R³ représente un radical alkylène en C₂ à C₄,
y est égal à 0 ou représente un nombre dont la valeur varie de 1 à 3 et
R⁴ représente un atome d'hydrogène ou un reste alkyle en C₁ à C₄, avec la condition que lorsque y est égal à 0, R⁴ représente un atome d'hydrogène

3. Procédé suivant la revendication 1, caractérisé en ce que l'on utilise, à titre de composés polyhydroxylés (b), au moins un polyoxyalkylènepolyol (b1) d'une fonctionnalité de 2 à 3 et d'un indice d'hydroxyle de 14 à 160, que l'on prépare par la polyaddition d'au moins un oxyde d'alkylène sur une molécule amorceuse choisie dans le groupe formé par le N,N-diméthyldiaminopropane-1,3, le N,N-diméthyldiaminobutane-1,4 et la N,N-diméthyldipropylènetriamine.

4. Procédé suivant la revendication 1, caractérisé en ce que l'on utilise, à titre de composés polyhydroxylés (b), au moins un polyoxypropylène-polyoxyéthylène-polyol séquencé (b2) d'un indice d'hydroxyle de 14 à 65 et d'une teneur en unités oxyde d'éthylène terminalement liées de 2 à 9% en poids, par rapport au poids des unités polyoxypropylène, que l'on prépare par la polyaddition anionique à des températures élevées de l'oxyde de 1,2-propylène sur un mélange de molécules amorceuses d'une fonctionnalité de 2,3 à 2,8, à partir d'eau et de glycérine et/ou de triméthylolpropane et la polyaddition de l'oxyde d'éthylène sur l'adduit de polyoxypropylène obtenu.

5. Procédé suivant l'une quelconque des revendications 1 à 4, caractérisé en ce que l'on utilise, à titre de composés polyhydroxylés (b), un mélange qui contient (b1) et (b2).

6. Procédé suivant l'une quelconque des revendications 1 à 5, caractérisé en ce que l'on utilise, à titre de composés polyhydroxylés (b), un mélange qui, par rapport au poids total, contient
2 à 50% en poids de (b1) et
10 à 50% en poids de (b2).

7. Procédé suivant l'une quelconque des revendications 1 à 6, caractérisé en ce que l'agent de réticulation (c) se compose d'au moins un polyoxypropylène-, polyoxyéthylène- ou polyoxypropylène-polyoxyéthylène-polyol amorcé à la glycérine et/ou au triméthylolpropane, d'un indice d'hydroxyle qui varie de 210 à 970 et d'une teneur en ions alcalins de 150 à 800 ppm.

8. Procédé suivant l'une quelconque des revendications 1 à 7, caractérisé en ce que les acides inorganiques employés à titre d'additif (f), sont choisis dans le groupe formé par l'acide chlorhydrique et l'acide phosphorique et les acides organiques sont choisis dans le groupe formé par les acides monocarboxyliques, les acides polycarboxyliques et les acides sulfoniques aromatiques.

9. Procédé suivant l'une quelconque des revendications 1 à 8, caractérisé en ce que l'on utilise l'acide ricinoléique à titre d'additif (f).

10. Procédé suivant l'une quelconque des revendications 1 à 9, caractérisé en ce que l'on utilise l'eau à titre d'agent porogène (d).
